# EUROPEAN PATENT SPECIFICATION

(11) **EP 2 864 864 B1**
(45) Date of publication and mention of the grant of the patent: **29.07.2020**
(21) Application number: 13759808.2
(22) Date of filing: 18.06.2013
(51) Int. Cl.: G06F 3/06, G06F 9/445, G06F 11/14, G06F 16/18, G06F 16/23

(54) **SYSTEMS AND METHODS FOR IN-PLACE REORGANIZATION OF DEVICE STORAGE**
SYSTEME UND VERFAHREN FÜR EINE VOR-ORT-NEUORGANISATION EINER VORRICHTUNGSSPEICHERUNG
SYSTÈMES ET PROCÉDÉS DE RÉORGANISATION IN SITU D'UNE MÉMOIRE D'UN DISPOSITIF

(30) Priority: 26.06.2012 US 201261664634 P
(43) Date of publication of application: 29.04.2015
(73) Proprietor: Red Bend Ltd., 4524075 Hod Hasharon (IL)
(72) Inventor: MELLER, Evyatar, Yad Binyamin 76812 (IL); SALARIOS, Yoav, Kiryat Ono (IL)
(74) Representative: Rummler, Felix
(86) International application number: PCT/IB2013/001270
(87) International publication number: WO 2014/001870

(56) References cited:
- EP-A2- 1 564 634
- US-A- 6 058 489
- US-A1- 2010 030 823
- US-A1- 2012 110 288
- US-B1- 6 209 059

## Description

### FIELD

The present disclosure relates to the in-place reorganization of content stored in a storage device, specifically, the in-placed updating of an original version of content of a non-volatile storage device into an updated version.

### BACKGROUND

Computer storage, such as hard disk or flash memory, is typically split into several partitions. Each of these partitions store data in a specific format, commonly referred to as a file system format. It may sometimes be required to change sizes of one or more of the partitions in order to allow for more content to be stored in a particular partition, or to move content from one partition to another. In some instances, such repartitioning or reorganization may also be required in order to free storage space for performance reasons, such as with the defragmentation of a hard disk drive, or to resize file system partitions.

With many types of devices, it may also be required to update content stored in the storage units of such devices. For example, stored content may need to be updated in order to perform an upgrade or update of a software application or an operating system (OS). Such upgrades may include major updates required to fix a problem or bug, to introduce new features, or to replace an existing OS with a new OS or updated version. These upgrades typically replace existing executable files and libraries (e.g., shared libraries) corresponding to the OS or software application being upgrades. In some instances, many different types of content may need to be updated, such as text, source code, data stored in a database, etc.

Traditional techniques for reorganization of stored content may often require significant extra storage space and/or downtime for the device containing the content storage unit. In many instances, these convention techniques may require additional storage space or as much free storage space available as the content to be reorganized, in order to store a full copy of the content. This may be a problem for devices that do not have access to a significant amount of extra storage space, such as may be the case with mobile devices, such as smart phones.

Accordingly, there is a need for a technical solution to provide the in-place repartitioning or reorganization of an original version of content in a storage device into an updated version of the content that reduces the need for backup storage.

US 2010/030823 A1 discloses a method of updating an original version of content to a new version of content, in a non-volatile memory storage device. The method includes: providing a non-volatile content memory storage area arranged to accommodate a full version of content; providing an auxiliary memory area; performing, while at least part of the content memory storage area is not being updated, at least one pre-update operation corresponding to at least one in-place update operation applicable, in an in-place update, on the part of the content memory storage area; storing, while at least part of the content memory storage area is not being updated, at least one result of the performed at least one pre-update operation, on the auxiliary memory area; and performing an in-place update of the at least part of the content memory storage area utilizing the at least one result stored on the auxiliary memory area.

US 6,209,059 B1 discloses a method of dynamically reconfiguring the logical devices in a storage system. The method allows logical devices to be added, removed, or repositioned without requiring the storage system to be taken off-line. The method includes manipulating the request queues associated with host controllers within the storage system. The request queues associated with each logical device may be repositioned in the request queue memory in order to make room for new logical devices or to take advantage of free space associated with a removed logical device. The storage system communicates with the host computer in order to manage the reconfiguration of the request queues while still providing storage services to the host computer.

US 6,058,489 A discloses a system for performing on-line reconfiguration of a disk array in which a source logical volume is reconfigured to a destination logical volume. Disk array configuration is invoked if a new physical drive is inserted, or a drive is removed. Reconfiguration can also be performed if the user desires to change the configuration of a particular logical volume, such as its stripe size. The disk array reconfiguration is run as a background task by firmware on a disk controller board. The reconfigure task first moves data from the source logical volume to a posting memory such as RAM memory. The reconfigure task operates one stripe at a time, with the stripe size being that of the destination logical volume. Once a stripe of data is moved into the posting memory, it is written back to corresponding locations in the destination logical volume. The reconfigure task continues until all data in the source logical volume have been moved into the destination logical volume. While the reconfigure task is working on a particular logical volume, data remains accessible to host write and read requests.

EP 1 564 634 A2 discloses a general RAID conversion method for converting between different RAID configurations. The method includes reading a unit of user data from the source devices according to the source RAID algorithm, writing the user data together with redundant data (if any) to the target devices according to the target RAID algorithm, and from time to time releasing portions of the source devices containing data that has been converted. The conversion may be used to expand or contract the array, to increase or decrease usable capacity, and to increase or decrease the device-loss insurance level. Conversion may be performed on line (dynamically) or off line. The flexibility of the method allows the implementation of manual and/or rule-based RAID reconfiguration that automatically adjusts system parameters based on user request and/or a set of rules and conditions respectively. It may also be used to perform self-healing after one or more devices in the array have failed.

### SUMMARY

The present disclosure provides a description of a systems and methods for the in-place reorganization of content stored in a non-volatile storage of a device and reorganized according to an original organization scheme into a target organization scheme having at least one target storage unit and a target organization logic. A storage unit or unit of storage is a discernible data entity that can serve as a logical subdivision on a non-volatile storage for purposes of content organization. Non-limiting examples or storage units are data stores such as databases, file systems and virtual machines as well as partitions, folders and flat files. As such, an individual storage unit may be physically contiguous in the nonvolatile storage, but does not need to be, so that it can also be non-contiguous in the non-volatile storage. Furthermore, it is noted that a storage unit will typically comprise one or more data elements, i.e. logical building blocks that are part of the storage unit. For example, if the data unit is identified as a partition, then folders or files can be seen as data elements of the partition. Or, if a database is seen as a storage unit, then records can be seen as data elements. Data elements may also be any meta data useable for the organization of the content in the storage unit, such as file headers, address tables etc.

The present invention provides a method for in-place reorganization of content stored in a non-volatile storage of a device and organized according to an original organization scheme having at least one original storage unit and on original organization logic associated therewith, to a target organization scheme having at least one target storage unit and a target organization logic associated therewith in accordance with claim 1.

The present invention also provides a non-transitory compute readable medium having program logic stored thereon in accordance with claim 12.

Preferably, the original organization scheme comprises a file system or database including a plurality of data elements, and the program logic or method steps for generating is further arranged for creating a mapping between the plurality of data elements in the original organization scheme and a plurality of target data elements in the target organization scheme; where the mapping is such that for each data element of the original file system or database: data blocks in the nonvolatile storage containing contents of the data element are searched for; the original organization logic is simulated and original locations in the non-volatile storage corresponding to the data blocks are recorded; and the target organization logic to record write locations of the target organization logic is simulated without writing to the non-volatile storage.

The present invention also provides a system for in-place reorganization of non-volatile storage of a mobile device having an original organization scheme to a target organization scheme having at least one target storage unit and a target organization logic associated therewith in accordance with claim 13.

### BRIEF DESCRIPTION OF THE DRAWING FIGURES

The scope of the present disclosure is best understood from the following detailed description of exemplary embodiments when read in conjunction with the accompanying drawings. Included in the drawings are the following figures:
FIG. 1 is a schematic illustration of a system for reorganizing storage on a device in a network in accordance with exemplary embodiments.
FIG. 2 is a block diagram illustrating a non-volatile storage comprising original storage units of an original organization scheme and target storage units of a target organization scheme for reorganizing via the system of FIG. 1 in accordance with exemplary embodiments.
FIG. 3 is a schematic illustrating of a system for reorganizing storage of devices in wireless networks in accordance with exemplary embodiments.
FIG. 4 is an illustration of an original file system partition layout and target file system partition layout in accordance with exemplary embodiments.
FIGS. 5 and 6 are flow charts illustrating exemplary methods for in-place reorganization of storage of a device in accordance with exemplary embodiments.
FIG. 7 is a block diagram illustrating a computer system architecture in accordance with exemplary embodiments.

Further areas of applicability of the present disclosure will become apparent from the detailed description provided hereinafter. It should be understood that the detailed description of exemplary embodiments are intended for illustration purposes only and are, therefore, not intended to necessarily limit the scope of the protection, which is defined by the claims.

### DETAILED DESCRIPTION

### System for In-Place Reorganization of Stored Contents

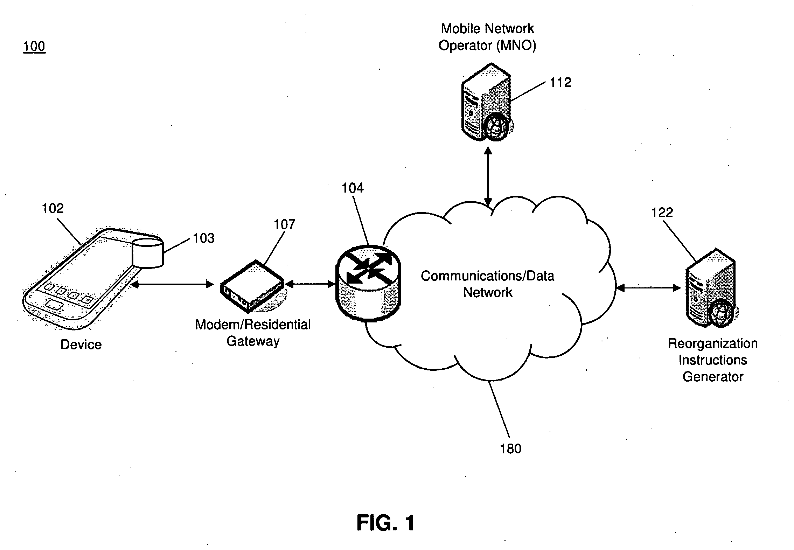

FIG. 1 is a schematic diagram illustrating an exemplary reorganization system 100 in accordance with exemplary embodiments. The reorganization system 100 may include a communications network 180, which may be associated with a mobile network operator (MNO) 112. The communications network 180 may be configured to facilitate communication between the MNO 112 and one or more devices 102. The device 102 may be configured to access the communications network 180 via a modem/residential gateway 107 and/or a router 104. The communications network 180 may also be connected with a reorganization instructions generator 122. Although the system 100 of FIG. 1 is illustrated as including only a single MNO 112 and communications network 180, it should be understood that the reorganization system 100 may include a plurality of MNOs 112 that are in turn associated with multiple communication networks 180. Similarly, a plurality of reorganization instructions generators 122 may be used.

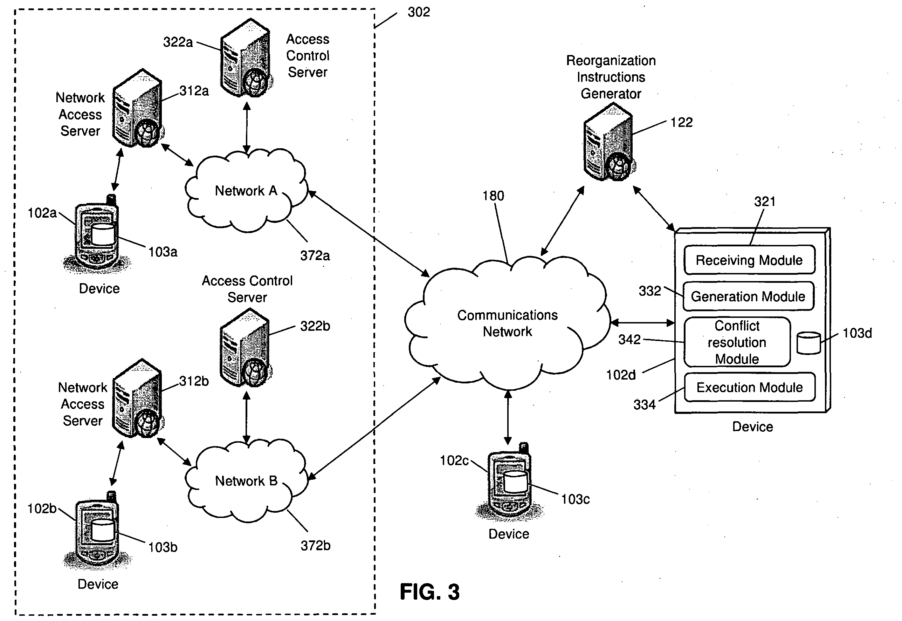

The device 102 may be any type of device suitable for performing the functions as disclosed herein as will be apparent to persons having skill in the relevant art, such as a desktop computer, laptop computer, tablet computer, cellular phone, smart phone, etc, or any other type of embedded device such as meters, medical devices, implantables, etc. Exemplary embodiments of the device 102 are discussed in more detail below with respect to FIGS. 3 and 7. The device 102 may include a non-volatile storage 103. The non-volatile storage 103 may store content, which may be content for which the in-place reorganization of is sought. The device 102 may be configured to reorganize the stored content from an old or original version into a new version.

As used herein, the terms "old version" or "original version" may refer to a version of content before an update. The terms "new version," "target version," or "updated version" may refer to a version of content that includes already updated content. It should be noted that the updated content may be further updated, and that in such an instance, the first or prior update would constitute old content, and the second or subsequent update would constitute new content.

To perform the reorganization of the original content stored in the non-volatile storage 103, the device 102 may receive reorganization instructions from the reorganization instructions generator 122 via the communications network 180. In some embodiments, the reorganization instructions may be transmitted by the reorganization instructions generator 122 to the device 102 (e.g., push from a server). In other embodiments, the reorganization instructions may be actively requested and/or obtained by the device 102 from the reorganization instructions generator 122 (e.g., pull from a device). In one embodiment, the reorganization instructions may be embedded in the device 102, such as in a partition in the non-volatile storage 103 or in a separate storage. In another embodiment, the reorganization instructions may be generated by the device 102, such as by logic executed in the device 102.

The device 102 may then use the obtained instructions to generate an update package comprising a sequence of update commands, whose execution may result in the target organization scheme, wherein each reorganization instruction is the basis of one or more update commands to be executed in sequence on the device 102. In some embodiments, the update commands may include one or more of: move, reformat, change format, defragment, create, resize, and delete commands. In some instances, the update commands may identify a specific partition included in the non-volatile storage 103.

The device 102 may then initiate a reorganization process, whereby the device 102 applies the generated sequence of update commands in the defined sequence in order to in-place update original content stored in the non-volatile storage 103 into updated content in the non-volatile storage 103. In some embodiments, the device 102 may apply update commands generated from a plurality of update packages. In some instances, the reorganization instructions may be transmitted to the device by the MNO 112, acting as or on behalf of the reorganization instructions generator 122. For example, the MNO 112 may transmit reorganization instructions to update an operating system (e.g., Android, iOS, Linux, Windows, etc.) on a smart phone that operates on a communications network 180 associated with the MNO 112.

The update commands generated and/or applied by the device 102 may be conceptualized as "delta update commands" used for update commands that can be applied to handle delta updates without having to provide a full new version of the content to be reorganized, and instead only providing differences (e.g., deltas) between the old version of the content and new version of the content. Example systems and methods for generating update packages for use in in-place updating of contents of a storage device are described in U.S. Patent Application Publication US 2008/0172584 A1 entitled "Method and System for In-Place Updating Content Stored in a Storage Device," filed January 11, 2007; U.S. Patent Application Publication US 2010/0185921 A1 entitled "Method and System for In-Place Updating Content Stored in a Storage Device," filed February 7, 2010; U.S. Patent Application Publication US 2008/0196019 A1 entitled "Method and Apparatus for Generating an Update Package, "filed November 9, 2007; and U.S. Patent Application Publication US 2011/0093841 A1 entitled "Method and System for Updating Versions of Content Stored in a Storage Device "filed November 16, 2010.

### Non-Volatile Storage

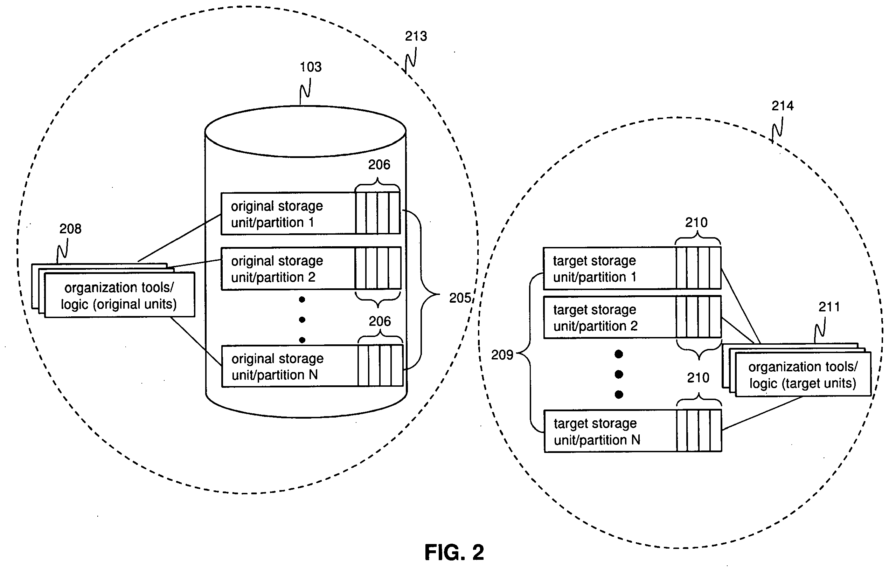

FIG. 2 illustrates components of the non-volatile storage 103 of the device 102 and storage organization schemes. It should be apparent to persons having skill in the relevant art that FIG. 2 is provided as a means of illustration only and the non-volatile storage medium 103 may not be limited to the illustrated embodiment.

The non-volatile storage 103 may include original storage units 205 of an original organization scheme 213. The original organization scheme 213 may be formed by the original storage units 205 and their corresponding one or more data blocks (e.g., data blocks, file contents, etc.) 206, and original organization tools (e.g., organization logic, program logic, etc.) 208. As illustrated in FIG. 2, the original organization tools 208 may correspond to each of the original storage units 205. In some embodiments, multiple original storage units 205 may share a single organization tool 208, such as in instances where the multiple original storage units 205 share the same file system or structure. It should also be noted that, although the original organization scheme 213 is illustrated as including a plurality of original storage units 205, the original organization scheme 213 may be formed with respect to a single original storage unit 205.

The non-volatile storage 103 may be reorganized by the device 102, based on the generated sequence of update commands, based on a target organization scheme 214. The target organization scheme 214 may be formed by one or more target storage units 208, their corresponding one or more data blocks 210, and target organization tools 211 corresponding to each of the target storage units 208.

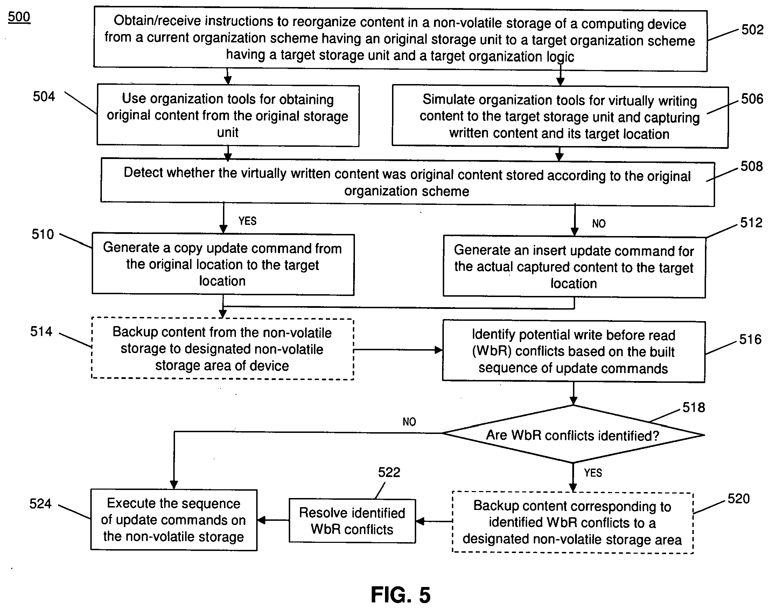

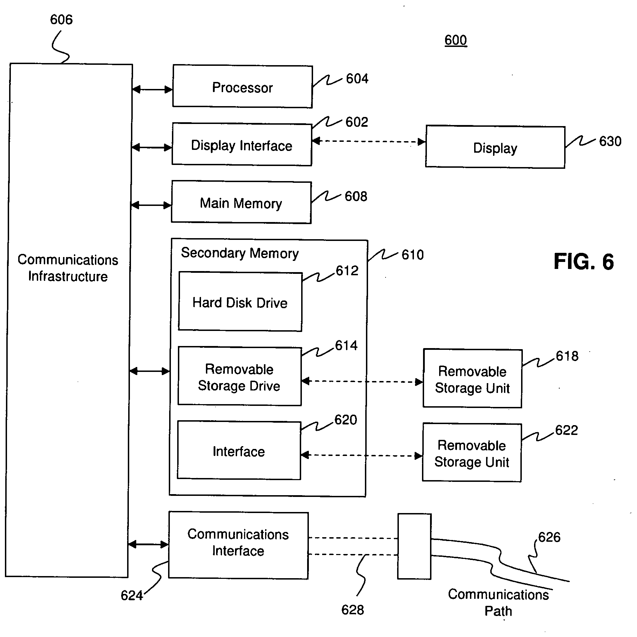

The device 102 may apply the generated update commands in the determined sequence such that the non-volatile storage 103 having the original organization scheme 213 may be reorganized into the one or more target storage units 209 based on the target organization scheme 214. The reorganization of the stored content based on organization schemes is discussed in more detail below with respect to FIGS. 5 and 6.

The original organization tools 208 may correspond to data formats and file systems used by software applications and/or the operating system installed on the device 102. For example, an original organization tool 208 of the original organization scheme 213 may comprise organization logic or program logic from a database management system (e.g., SQL, ORACLE®, etc.), a web server (e.g., Apache, etc.), or may be tools specific to a file system (e.g., New Technology File System, File Allocation Table, fourth extended file system, Hierarchical File System, etc.), such as the file system utilized by the corresponding at least one original storage unit 205. The organization tools and logics may include any logic and/or additional data representing how data blocks 206 and/or file or data objects include therein in a given storage unit are accessed

### In-Place Reorganization of Storage Contents in a Wireless Network

FIG. 3 illustrates a system 300 for the in-place reorganization of content stored in non-volatile storage of mobile devices in a wireless network environment.

The system 300 may include a plurality of devices 102, such as cellular phones, smart phones, tablet computers, netbook computers, laptop computers, personal digital assistants, etc. Each device 102 may include a non-volatile storage 103, which may be configured to store content to be reorganized based on a sequence of update commands generated based on reorganization instructions.

In some instances, devices 102 in the system 300 may be configured to communicate with a wireless network 372 via a wireless communication protocol. Such mobile communication devices 102 and wireless networks 372 may be a part of a wireless environment 302 serviced by a service provider. In one embodiment, the service provider may be an MNO, such as the MNO 112. The wireless networks 372 may be configured to communicate with the reorganization instructions generator 122 via the communications network 180. The system 300 may also include devices 102 communicating directly with the communications network 180, similar to the system 100 in FIG. 1 discussed above.

The devices 102 in the wireless environment 302 may be configured to communicate with the corresponding wireless network 372 via a network access server 312. The network access server 312 may authenticate the device 102 prior to allowing communication to/from the device 102, such as for security reasons. The network access server 312 may receive requests from the devices 102 and may provide access to the wireless network 372 to the corresponding devices. In some embodiments, the network access servers 312 may be further configured to generate an access request message, which is then transmitted to an access control server 322. The format of the access request message may vary depending on the wireless protocol being used by the network access server 312 to authenticate the user. Suitable formats for the access request message will be apparent to persons having skill in the relevant art and may include, for example, dynamic host configuration protocol (DHCP), remote authentication dial in user service (RADIUS), terminal access controller access control system (TACACS), etc.

The access control server 322 may be configured to receive the access request messages and forward the access request messages and/or data included in the access request messages to the appropriate service provider (e.g., the MNO 112). The access control server 322 may be further configured to perform authentication and to process access control for at least one format. In some instances, the wireless network 372 may include multiple access control servers 322 configured to receive access request messages for each of a number of formats.

To reorganize content stored in the non-volatile storage 103 of a device 102, the device 102 may request or may receive reorganization instructions from the reorganization instructions generator 122. In order to carry out this process, the device 102, such as the device 102a, may request access to the wireless network 372a via the network access server 312a. The network access server 312a may generate an access request message and transmit the message to the access control server 322a via the wireless network 372a. The access control server 322a may process the access request message and indicate to the network access server 312a that the user/device has been authenticated, which may then in turn provide the device 102a with access to the wireless network 372a. The device 102a may then communicate with the reorganization instructions generator 122 via the wireless network 372a and the communications network 180 to request and/or receive reorganization instructions.

It will be apparent to persons having skill in the relevant art that, in some embodiments, the wireless network 372a may be the communications network 180 and/or the reorganization instructions generator 122 may communicate directly with the wireless network 372a. In other embodiments, a device 102, such as the device 102c, may communicate directly with the communications network 180. In yet another embodiment, a device 102, such as the device 102d, may be configured to communicate directly with the reorganization instructions generator 122.

### Device

FIG. 3 includes an exemplary embodiment of a device 102 for use in the systems 100 and 300, illustrated as the device 102d in FIG. 3. The device 102d may include a receiving module 321, an generation module 332, a conflict resolution module 342, and an execution module 334. The device 102d may also include the non-volatile storage 103 for storing the content to be reorganized.

The receiving module 321 may be configured to receive and/or obtain instructions to reorganize the content in the non-volatile storage from the reorganization instructions generator 122. In some instances, the receiving module 321 may request (e.g., pull) the reorganization instructions from the reorganization instructions generator 122. In other instances, the receiving module 321 may receive the reorganization instructions transmitted by (e.g., pushed) the reorganization instructions generator 122 without a prior request. It will be apparent to persons having skill in the relevant art that, in some embodiments, the receiving module 321 may receive the reorganization instructions from another entity acting as or on behalf of the reorganization instructions generator 122, such as the MNO 112, another device 102, etc. In one embodiment, the reorganization instructions may be generated internally by the device 102, such as by the generation module 332. In a further embodiment, the device 102 may be configured such that reorganization instructions for reconfiguring/resizing a partition are generated (e.g., automatically) when the partition is nearing capacity.

The generation module 332 may be configured to generate, based on the reorganization instructions, a sequence of update commands such that, when applied to the device 102, will reorganize the content stored in the non-volatile storage 103 from the original organization scheme 213 having one or more original storage units 205 and corresponding original organization tools 208 to the target organization scheme 214 having one or more target storage units 209 and corresponding target organization tools 211. To generate the sequence of update commands, the generation module 332 may utilize a virtual storage, such as by virtually writing the content stored in the non-volatile storage 103 to a virtual storage based on the target organization scheme 214 and simulating the target organization tools 209. The generation module 332 may then capture the content virtually written to the target storage unit and detect its target location without necessarily writing to the non-volatile storage. The generation module 332 may then also decide whether the captured content was original content stored according to the original organization scheme 213 and its original location. If the captured content was original content, then the generation module 332 may generate a copy update command, to copy the content from its original location to the detected target location. If the content was not part of the original content in the original organization scheme 213 (e.g., it was generated by the target organization scheme 214 for management), then an insert update command may be generated to insert the actual content to the detected target location.

This is thus an example of method according to the invention where the generating comprises: obtaining the contents stored in the non-volatile storage organized according to the original organization scheme by using the original organization logic; applying the target organization logic to the obtained contents for virtually writing it to a virtual storage; capturing data elements virtually written by the target organization logic to their respective target locations in the non-volatile memory without necessarily writing to the non-volatile storage; determining for the captured data elements whether they are part of the original content stored in the non-volatile storage and if so their original location in the non-volatile storage; for captured data elements that are not part of the original content stored in the non-volatile memory generating update commands for storing these data elements to the target locations in the target organization scheme ; and for captured data elements that are part of the original content stored in the non-volatile memory creating, as part of the update commands, a mapping between their original locations in the non-volatile storage and the target locations in the non-volatile storage.

In some instances, when updating the stored content in the non-volatile storage 103 from an original organization scheme 213 to a target organization scheme 214, update commands may be configured to use the original content in order to generate the updated content. For example, original content stored in a first location in the non-volatile storage 103 may be copied to a new location, which constitutes a part of the updated content. In such an instance, the new location may have been used previously to store other original content. In such an instance, the content that is copied into the new location may overwrite the original content in that new location. If the original content in that new location is to also be copied and utilized as part of the new content, then the situation may arise where that original content is overwritten prior to its copying. In such an instance, a write-before-read (WbR) conflict occurs, and absent resolution, the original content in the new location may be overwritten and lost.

The conflict resolution module 342 may be configured to identify, based on the generated sequence of update commands, potential WbR conflicts. The conflict resolution module 342 may be further configured to resolve the potential WbR conflicts by performing one of: reordering the sequence of update commands, backing up content corresponding to an identified potential WbR conflict to a designated backup area in the non-volatile storage 103, deleting update commands, and altering update commands. Preferably, the backing up of content is optimized by reducing the amount of storage required for the backup or the time required to create the backup. In some instances, the conflict resolution module 342 may be configured to identify potential WbR conflicts as part of the sequence of update commands. For example, while executing the update commands, the conflict resolution module 342 may identify that the next update command in the sequence to be executed may result in a WbR conflict, and may identify a resolution to the conflict on the fly before the sequence of update commands continues. In a further instance, the sequence of update commands may continue on to execute other subsequent commands in the sequence where WbR conflicts do not arise, while the identified WbR conflict is being resolved. Additional information regarding WbR conflicts and the resolution thereof is described in U.S. Patent No. 6,018,747 entitled "Method for Generating and Reconstructing In-Place Delta Files," issued January 25, 2000, and U.S. Patent Application Publication US 2007/0050430 A1 entitled "Method and System for Updating Content Stored in a Storage Device," filed August 23, 2006.

In instances where the content of a segment (e.g., a storage unit, data block 206, etc.) in the updated version corresponds to a segment in the original version, the segments may be considered to be corresponding segments or matched segments. Correspondence may refer to any logic or arithmetic connection between the segments, wherein the updated segment may be a copy of the original segment, a modified copy of the original segment, content received by computing the content of the updated segment based on the content of the original segment, etc. In some instances, more than one updated segment may correspond to a single original segment, or a single updated segment may correspond to more than one original segments.

The execution module 334 may be configured to execute the sequence of update commands on the non-volatile storage 103. In some embodiments, the execution module 334 may execute the sequence of update commands following the resolution of identified potential WbR conflicts by the conflict resolution module 342. In other embodiments, the execution module 334 may execute the sequence of update commands concurrently or intermittently with the resolution of WbR conflicts by the conflict resolution module 342.

It will be apparent to persons having skill in the relevant art that the device 102 may include additional modules or that the modules illustrated in FIG. 3 as being included in the device 102 may be combined and/or configured to perform the functions of more than one module. In addition, the modules included in the device 102 may be configured to perform additional functions as discussed in more detail below and as will be apparent to persons having skill in the relevant art.

The device 102 may be configured to provide for reliable/failsafe reorganization of the content stored in the non-volatile storage 103. For the reorganization to be considered reliable, the associated update process should be able to be resumed even subsequent to an interruption which causes volatile memory to be erased and/or a block in storage to be corrupted (e.g., failsafe operations). In some instances, failsafe update of content stored in the non-volatile storage 103 may include the backing up of any content prior to the content being written in the non-volatile storage 103. In such an instance, any interruption or error resulting in damage (e.g., corruption, loss, etc.) to the memory may be remedied by the backed up content.

It will be apparent to persons having skill in the relevant art that a variety of techniques may be used to optimize the usage of backup memory used in reliable or failsafe update. Suitable systems and methods for use in optimizing backup memory are disclosed in more detail in U.S. Patent No. 11/508,337, entitled "Method and System for Updating Content Stored in a Storage Device," to Evyatar Meller et al., filed August 23, 2006, and U.S. Patent No. 11/997,134, entitled "Method and System for In-Place Updating Content Stored in a Storage Device," to Evyatar Meller et al., filed June 13, 2008.

### Reorganization of Content in Non-Volatile Storage

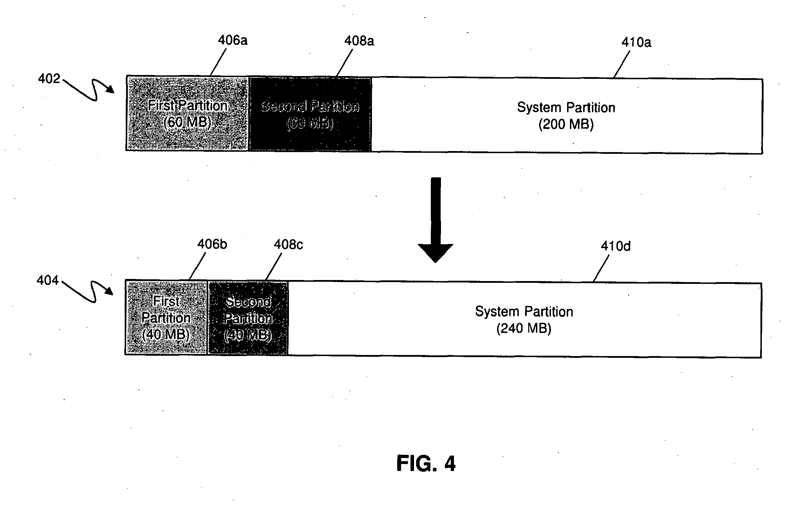

FIG. 4 is an illustration of a file system layout in the non-volatile storage 103 of the device 102.

As illustrated in FIG. 4, the non-volatile storage 103 may store content in an original version 402, which may be stored based on an original organization scheme 213. The original version 402 may include a plurality of storage units/partitions, such as the first partition 406a, second partition 408a, and system partition 410a. Each partition may be a single storage unit or partition (e.g., original storage unit 205), may be comprised of multiple storage units or partitions, or may be comprised of one or more data blocks (e.g., data blocks 206).

The device 102 may be configured to reorganize the original version 402 of the stored content based on the original organization scheme 2 3 to an updated version 404 based on a target organization scheme 214. The device 102 may generate and execute a sequence of update commands based on reorganization instructions such that the content stored in the non-volatile storage 103 may be updated from the original version 402 to the updated version 404.

In the updated version 404, the non-volatile storage 103 may still include the first partition 406b, second partition 408b, and system partition 408c. As illustrated in FIG. 4, the sizes of each of the partitions 406b, 408b, and 410b in the updated version 404 may differ from the sizes of the corresponding partitions 406a, 408a, and 410c in the original version 402, such as a result of the target organization scheme 214 and/or corresponding target organization tools 211. In such an instance, the non-volatile storage 103 may be reorganized based on the target organization scheme 214 to increase and/or decrease the size of specific partitions.

For example, the non-volatile storage 103 of the device 102 may include a system partition, such as the system partition 410a, for storing an operating system (OS). The OS may be of a size where the system partition 410a must be 200 megabytes in order to store the operating system. The non-volatile storage 103 may also include a first partition 406a, such as a partition for user storage, and a second partition 408a, such as a partition for application programs provided by a service provider (e.g., the MNO 112). Each of the first and second partitions 406a and 408a may be 60 megabytes.

The developer of the OS may release an update for the OS, such as to fix bugs and add new features. The new version of the OS may require an increase in the available storage space, such as an increase to 240 megabytes. In order to accommodate the new version of the OS, the non-volatile storage 103 may need to be updated such that the system partition includes at least the 240 megabytes required. The receiving module 321 of the device 102 may receive and/or obtain reorganization instructions for reorganizing the non-volatile storage 103 to accommodate the updated version of the OS.

The generation module 332 may generate a sequence of update commands based on the reorganization instructions, the conflict resolution module 342 may identify and resolve any potential WbR conflicts based on the sequence of update commands, and the execution module 334 may execute the sequence of update commands on the non-volatile storage 103. The update commands, once executed, may result in the original version 402 of the non-volatile storage 103 being reorganized into the updated version 404. As part of the reorganization, the 60 MB first partition 406a may be shrunk into a 40 MB partition 406b, the second partition 408a may be similarly shrunk from 60 MB to the 40 MB partition 408b, and the system partition 410a may be increased to the required 240 MB as illustrated in the system partition 410b in the updated version 404.

### Exemplary Method for In-Place Reorganization of Stored Contents

FIG. 5 illustrates a first exemplary method 500 for the in-place reorganization of content stored in the non-volatile storage 103 of the device 102.

In step 502, reorganization instructions may be received and/or obtained (e.g., by the receiving module 321) for the reorganization of content stored in the non-volatile storage 103 from an original organization scheme 213 having at least one original storage unit 205 and an original organization logic 208 associated therewith to a defined target organization scheme 214 having at least one target storage unit 209 and a corresponding target organization tool 211 associated therewith. In some embodiments, the device 102 may request the instructions, such as from the reorganization instructions generator 122. In other embodiments, the reorganization instructions may be transmitted to the device 102 without a prior request. In another embodiment, the reorganization instructions may be generated internally by the device 102 in accordance with an internal rule.

In one embodiment, at least one original storage unit 205 or target storage unit 209 may not be contiguous in the non-volatile storage 103. On the other hand, in another embodiment the original storage unit or target storage unit may be contiguous in the non-volatile storage 103. In some embodiments, the non-volatile storage 103 may include a plurality of partitions (e.g., original storage units 205), each of which having a respect original organization tool or logic 208 associated therewith. In other words, a partion is an example of a storage unit. In such an embodiment, the original organization scheme 213 and target organization scheme 214 may each include a partition layout, which may include at least the size, location, and format of each partition of the plurality of partitions, and the reorganization instructions may include instructions to reorganize (e.g., repartition) the non-volatile storage 103 from the original partition layout to the target partition layout. In a further embodiment, the instructions may include at least one of: move, reformat, change format, defragment, create, resize, delete, and update commands for respective partitions of the plurality of partitions. In another further embodiment, the plurality of partitions may include at least one file system partition storing data in a specific file system format.

In step 504, the original organization tools or logic 208 of the original organization scheme 213 may be used to obtain the original content and its location in the original storage unit 205. In step 506, the target organization tools or logic 209 of the target organization scheme 214 may be simulated for virtually writing the content obtained in step 504 to a virtual storage for detecting their target location in the corresponding target storage units 209. Note that inputting the target organization tool 209 with content to write (e.g., virtually) to the target units outputs the input content provided to the target organization tool 209, but may also output additional content generated by the target organization tool 209 for the management of the content by the tool 209. For example, the target organization tool 209 may be provided with files of content, which it may virtually write to the non-volatile storage 103, in addition to file headers, metadata, etc. generated for maintaining a specific file system format. Thus, step 506 also captures the actual content virtually written by the target organization tool 209.

In step 508, the device 102 may detect whether the virtually written content captured in step 506 was original content stored in the non-volatile storage 103 according to the original organization scheme 213 or was content not stored as part of the original content of the original organization scheme 213, such as metadata. If content is determined to be original content stored according to the original organization scheme, then, in step 510, a copy update command may be generated to copy the corresponding content from the obtained original location in the non-volatile storage 103 to the detected target location based on the target organization scheme 214. If the content is determined to not be original content, then, in step 512, the device 102 may generate an insert command to insert the corresponding content into the detected target location based on the target organization scheme 214.

In some embodiments, commands generated as part of steps 510 and 512 may be considered the sequence of update commands used to generate the target storage units 209 in the non-volatile storage 103 based on the target organization scheme 214. In some instances, the generated sequence of update commands may be generated into one or more update packages, such as to be executed by the device 102 in order to reorganize the non-volatile storage 103.

In some embodiments, the method 500 may also include step 514. In step 514, content stored in the non-volatile storage 103 may be backed up to a designated non-volatile storage area of the device 102. In a further embodiment, the non-volatile storage area may be a specific storage unit(s) or partition(s) in the non-volatile storage 103. In some instances, step 514 may be performed to ensure a reliable/failsafe reorganization of the stored content. It will be apparent to persons having skill in the relevant art that step 514 may be an optional step.

In step 516, any potential WbR conflicts may be identified (e.g., by the conflict resolution module 342) based on the sequence of update commands. In step 518, the device 102 may determine if any potential WbR conflicts were identified in step 516. If no conflicts were identified, then the method 500 may proceed to step 524. If conflicts were identified, then, in some embodiments, the backing up of content corresponding to identified WbR conflicts may be performed in step 520. It will be apparent to persons having skill in the relevant art that step 520 may be optional and performed only in instances where the backing up of content may be necessary to resolve identified WbR conflicts. In some embodiments, steps 510 and/or 512 may further include generated commands configured to optimize the backing up to be performed in steps 514 and/or 520 such that the amount of storage space and/or time required for the backing up is reduced.

In step 522, the identified WbR conflicts may be resolved (e.g., by the conflict resolution module 342). In some embodiments, the resolution of the identified potential WbR conflicts may be achieved by the performance of at least one of: reordering of the sequence of update commands, adding update commands, deleting update commands, or modifying update commands. In step 524, the \device 102 (e.g., the execution module 334) may execute the sequence of update commands to reorganize the content stored in the non-volatile storage 103. It will be apparent to persons having skill in the relevant art that steps 520 and 522, or in some instances steps 516-522, may be performed concurrently and/or intermittently with step 524. For example, WbR conflicts may be identified as they arise during execution of the update commands, and resolutions performed as part of or concurrently with the sequence of update commands.

It is noted that according to a preferred embodiment, the device whose non-volatile storage is being reorganized remains operational during the in-place reorganization of contents stored in the non-volatile storage. In other words, the content of the non-volatile storage remains accessible to a processor running the operational software of the device, and the device can perform additional tasks to the reorganization task so that a user can continue to use the device in a normal way and a shut-down of the device during the reorganization is avoided.

### Computer System Architecture

FIG. 6 illustrates a computer system 600 in which embodiments of the present disclosure, or portions thereof, may be implemented as computer-readable code. For example, the device 102, the mobile network operator 112, and the reorganization instructions generator 122 of FIG. 1, may be implemented in the computer system 600 using hardware, software, firmware, non-transitory computer readable media having instructions stored thereon, or a combination thereof and may be implemented in one or more computer systems or other processing systems. Hardware, software, or any combination thereof may embody modules and components used to implement the methods of FIGS. 5 and 6.

If programmable logic is used, such logic may execute on a commercially available processing platform or a special purpose device. A person having ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device. For instance, at least one processor device and a memory may be used to implement the above described embodiments.

A processor device as discussed herein may be a single processor, a plurality of processors, or combinations thereof. Processor devices may have one or more processor "cores." The terms "computer program medium," "non-transitory computer readable medium," and "computer usable medium" as discussed herein are used to generally refer to tangible media such as a removable storage device 618, a removable storage device 622, and a hard disk installed in hard disk drive 612.

Various embodiments of the present disclosure are described in terms of this example computer system 600. After reading this description, it will become apparent to a person skilled in the relevant art how to implement the present disclosure using other computer systems and/or computer architectures. Although operations may be described as a sequential process, some of the operations may in fact be performed in parallel, concurrently, and/or in a distributed environment, and with program code stored locally or remotely for access by single or multiprocessor machines. In addition, in some embodiments the order of operations may be rearranged without departing from the scope of the claims.

Processor device 604 may be a special purpose or a general purpose processor device. The processor device 604 may be connected to a communication infrastructure 606, such as a bus, message queue, network, multi-core message-passing scheme, etc. The network (e.g., the communications network 180) may be any network suitable for performing the functions as disclosed herein and may include a local area network (LAN), a wide area network (WAN), a wireless network (e.g., WiFi), a mobile communication network, a satellite network, the Internet, fiber optic, coaxial cable, infrared, radio frequency (RF), or any combination thereof. Other suitable network types and configurations will be apparent to persons having skill in the relevant art. The computer system 600 may also include a main memory 608 (e.g., random access memory, read-only memory, etc.), and may also include a secondary memory 610. The secondary memory 610 may include the hard disk drive 612 and a removable storage drive 614, such as a floppy disk drive, a magnetic tape drive, an optical disk drive, a flash memory, etc.

The removable storage drive 614 may read from and/or write to the removable storage device 618 in a well-known manner. The removable storage device 618 may include a removable storage media that may be read by and written to by the removable storage drive 614. For example, if the removable storage drive 614 is a floppy disk drive, the removable storage device 618 may be a floppy disk. In one embodiment, the removable storage device 618 may be non-transitory computer readable recording media.

In some embodiments, the secondary memory 610 may include alternative means for allowing computer programs or other instructions to be loaded into the computer system 600, for example, the removable storage device 622 and an interface 620. Examples of such means may include a program cartridge and cartridge interface (e.g., as found in video game systems), a removable memory chip (e.g., EEPROM, PROM, etc.) and associated socket, and other removable storage devices 622 and interfaces 620 as will be apparent to persons having skill in the relevant art. It will be apparent to persons having skill in the relevant art that methods disclosed herein for the in-place reorganization of contents may be performed on any of the memories included in the computer system 600 suitable for content reorganization.

Data stored in the computer system 600 (e.g., in the main memory 608 and/or the secondary memory 610) may be stored on any type of suitable computer readable media, such as optical storage (e.g., a compact disc, digital versatile disc, Blu-ray disc, etc.) or magnetic tape storage (e.g., a hard disk drive). The data may be configured in any type of suitable database configuration, such as a relational database, a structured query language (SQL) database, a distributed database, an object database, etc. Suitable configurations and storage types will be apparent to persons having skill in the relevant art.

The computer system 600 may also include a communications interface 624. The communications interface 624 may be configured to allow software and data to be transferred between the computer system 600 and external devices. Exemplary communications interfaces 624 may include a modem, a network interface (e.g., an Ethernet card), a communications port, a PCMCIA slot and card, etc. Software and data transferred via the communications interface 624 may be in the form of signals, which may be electronic, electromagnetic, optical, or other signals as will be apparent to persons having skill in the relevant art. The signals may travel via a communications path 626, which may be configured to carry the signals and may be implemented using wire, cable, fiber optics, a phone line, a cellular phone link, a radio frequency link, etc.

Computer program medium and computer usable medium may refer to memories, such as the main memory 608 and secondary memory 610, which may be memory semiconductors (e.g. DRAMs, etc.). These computer program products may be means for providing software to the computer system 600. Computer programs (e.g., computer control logic) may be stored in the main memory 608 and/or the secondary memory 610. Computer programs may also be received via the communications interface 624. Such computer programs, when executed, may enable computer system 600 to implement the present methods as discussed herein. In particular, the computer programs, when executed, may enable processor device 604 to implement the methods illustrated by FIGS. 5 and 6, as discussed herein. Accordingly, such computer programs may represent controllers of the computer system 600. Where the present disclosure is implemented using software, the software may be stored in a computer program product and loaded into the computer system 600 using the removable storage drive 614, interface 620, and hard disk drive 612, or communications interface 624.

## Claims

1. A method for in-place reorganization of contents stored in a non-volatile storage (103) of a device (102) and organized according to an original organization scheme (213) having at least one original storage unit (205) and an original organization logic (208) associated therewith, to a target organization scheme (214) having at least one target storage unit (209) and a target organization logic (211) associated therewith, the method comprising:
obtaining (502) instructions to reorganize the contents in the non-volatile storage (103) from the original organization scheme (213) to a defined target organization scheme (214);
generating (510, 512), on the device (102), based on the instructions and the simulating of the target organization logic (211) on a virtual storage, a sequence of update commands for generating in the non-volatile storage (103) the at least one target storage unit (209) organized according to the target organization scheme (214); and
executing (524) the update commands on the non-volatile storage (103),
wherein:
the original organization logic (208) comprises logic and/or metadata representing how data in the at least one original storage unit (205) is accessed and the target organization logic (209) comprises logic and/or metadata representing how data in the at least one target storage unit (211) is accessed;
the non-volatile storage (103) comprises a plurality of partitions (406, 408, 410) each having respective organization logic associated with it;
the original and target organization schemes (213, 214) each includes a partition layout indicating sizes, locations and formats of the plurality of partitions;
the instructions include instructions to repartition the non-volatile storage (103) from the original partition layout to the defined target partition layout; and
the generating (510, 512) comprises:
obtaining the contents stored in the non-volatile storage (103) organized according to the original organization scheme (213) by using the original organization logic (208);
applying the target organization logic (211) to the obtained contents for virtually writing it to a virtual storage;
capturing data elements virtually written by the target organization logic (211) to their respective target locations in the non-volatile memory without necessarily writing to the non-volatile storage (103);
determining for the captured data elements whether they are part of the original content stored in the non-volatile storage (103) and if so their original location in the non-volatile storage (103);
for captured data elements that are not part of the original content stored in the non-volatile memory generating update commands for storing these data elements to the target locations in the target organization scheme (211); and
for captured data elements that are part of the original content stored in the non-volatile memory creating, as part of the update commands, a mapping between their original locations in the non-volatile storage (103) and the target locations in the non-volatile storage (103).

2. The method of claim 1, further comprising:
identifying (516), based on the sequence of update commands potential write-before-read conflicts; and
resolving (522) the identified potential write-before-read conflicts.

3. The method of claim 2, further comprising:
backing up (520) content from the non-volatile storage (103) required for enabling failsafe reorganization, to a backup in a designated non-volatile storage area of the device (102).

4. The method of claim 2, wherein the resolving comprises one or more of:
reordering the sequence of update commands;
backing up (520) content corresponding to an identified potential write-before-read conflict, to a backup in a designated non-volatile storage area of the device (102);
adding update commands;
deleting update commands; and
altering update commands.

5. The method of one of claims 1 to 4, wherein the instructions include commands to update the contents.

6. The method of claim 1, wherein the repartitioning instructions comprise move, reformat, change format, defragment, create, resize, delete and update commands for respective ones of the plurality of partitions (406, 408, 410) .

7. The method of any one of claims 1 to 6, wherein:
the device (102) is a computing device; and
the plurality of partitions (406, 408, 410) contains at least one file system partition storing data in a specific file system format.

8. The method of claim 1, wherein the data elements comprise files, records, file headers and metadata.

9. The method of one of claims 1 to 8, wherein the device (102) remains operational during the reorganizing.

10. The method of one of claims 1 to 9, wherein:
the device (102) operates according to a Linux or an Android operating system; and
the file system partitions are fourth extended file system (ext4) partitions.

11. The method of one of claims 1 to 10, wherein the obtaining (502) includes one or both of generating instructions internally on the device (102) in accordance with an internal rule and receiving instructions from an external source (122).

12. A non-transitory computer readable medium having program logic stored thereon that, if executed by a computing device (102) having a physical storage (103) with an original organization scheme (213) including a plurality of storage units (205) each having a respective, original organization logic (208) associated therewith, cause the computing device to perform in-place reorganization of the physical storage (103) to a target organization scheme (214), the program logic comprising:
program logic for obtaining (502) instructions to reorganize the physical storage (103) from the original organization scheme (213) to a defined target organization scheme (214) having a plurality of target storage units (209), each having a respective, target organization logic (211) associated therewith;
program logic for generating (510, 512), on the computing device (102), based on the instructions and simulating the organization logics (211), a sequence of update commands for generating the plurality of target storage units (209) in the physical storage (103);
program logic for identifying (516), based on the sequence of update commands potential write-before-read conflicts that may result in data in the physical storage (103) being overwritten if the update commands are carried out;
program logic for resolving (522) the identified potential write-before-read conflicts; and
program logic for executing (524) the update commands on the physical storage (103),
wherein:
each original organization logic (208) comprises logic and/or metadata representing how data in the associated respective original storage unit (205) is accessed and each target organization logic (211) comprises logic and/or metadata representing how data in the associated respective target storage unit (209) is accessed;
the physical storage (103) comprises a plurality of partitions (406, 408, 410) each having respective organization logic associated with it;
the original and target organization schemes (213, 214) each includes a partition layout indicating sizes, locations and formats of the plurality of partitions;
the instructions include instructions to repartition the physical storage (103) from the original partition layout to the defined target partition layout; and
the program logic for generating (510, 512) comprises:
program logic for obtaining the contents stored in the physical storage (103) organized according to the original organization scheme (213) by using the original organization logic (208);
program logic for applying the target organization logic (211) to the obtained contents for virtually writing it to a virtual storage;
program logic for capturing data elements virtually written by the target organization logic (211) to their respective target locations in the non-volatile memory without necessarily writing to the physical storage (103) ;
program logic for determining for the captured data elements whether they are part of the original content stored in the physical storage (103) and if so their original location in the physical storage (103);
program logic for generating, for captured data elements that are not part of the original content stored in the physical memory, update commands for storing these data elements to the target locations in the target organization scheme (211); and
program logic for creating, for captured data elements that are part of the original content stored in the physical memory, as part of the update commands, a mapping between their original locations in the physical storage (103) and the target locations in the physical storage (103).

13. A system for in-place reorganization of non-volatile storage (103) of a mobile device (102) having an original organization scheme (213) having at least one original storage unit and an original organization logic associated therewith to a target organization scheme (214) having at least one target storage unit (209) and a target organization logic (211) associated therewith, the system comprising:
an obtaining module (321) configured to obtain instructions to reorganize the non-volatile storage (103) from the original organization scheme (213) to a defined target organization scheme (214) having at least one target storage unit (209) and a target organization logic (211) associated therewith;
a generation module (332) configured to generate, on the mobile device (102), based on the instructions and simulating the organization logic (211), a sequence of update commands for generating the at least one target storage unit (209) in the non-volatile storage (103);
a conflict identification module configured to invoke the organization logics (211) to identify, based on the sequence of update commands potential write-before-read conflicts that may result in data in the non-volatile storage (103) being overwritten if the update commands are carried out;
a conflict resolution module (342) configured to resolve the identified potential write-before-read conflicts; and
an execution module (334) configured to execute the update commands on the non-volatile storage (103),
wherein:
the original organization logic (208) comprises logic and/or metadata representing how data in the at least one original storage unit (205) is accessed and the target organization logic (209) comprises logic and/or metadata representing how data is the at least one target storage unit (211) is accessed;
the non-volatile storage (103) comprises a plurality of partitions (406, 408, 410) each having respective organization logic associated with it;
the original and target organization schemes (213, 214) each includes a partition layout indicating sizes, locations and formats of the plurality of partitions;
the instructions include instructions to repartition the non-volatile storage (103) from the original partition layout to the defined target partition layout; and
the generation module (332) is configured to generate a sequence of update commands by:
obtaining the contents stored in the non-volatile storage (103) organized according to the original organization scheme (213) by using the original organization logic (208);
applying the target organization logic (211) to the obtained contents for virtually writing it to a virtual storage;
capturing data elements virtually written by the target organization logic (211) to their respective target locations in the non-volatile memory without necessarily writing to the non-volatile storage (103);
determining for the captured data elements whether they are part of the original content stored in the non-volatile storage (103) and if so their original location in the non-volatile storage (103);
for captured data elements that are not part of the original content stored in the non-volatile memory generating update commands for storing these data elements to the target locations in the target organization scheme (211); and
for captured data elements that are part of the original content stored in the non-volatile memory creating, as part of the update commands, a mapping between their original locations in the non-volatile storage (103) and the target locations in the non-volatile storage (103).

14. The system of claim 13, wherein the generation module (332) is further configured to simulate the target organization logic (211) to record its target write locations in the non-volatile storage (103) without writing to the non-volatile storage (103).

## Patentansprüche

1. Verfahren für eine Vor-Ort-Neuorganisierung von Inhalten, die in einem nichtflüchtigen Speicher (103) einer Vorrichtung (102) gespeichert und gemäß einem ursprünglichen Organisationsschema (213) mit mindestens einer ursprünglichen Speichereinheit (205) und einer damit verbundenen ursprünglichen Organisationslogik (208) organisiert sind, zu einem Zielorganisationsschema (214) mit mindestens einer Zielspeichereinheit (209) und einer damit verbundenen Zielorganisationslogik (211), wobei das Verfahren Folgendes umfasst:
Erlangen (502) von Anweisungen zum Neuorganisieren des Inhalts in dem nichtflüchtigen Speicher (103) von dem ursprünglichen Organisationsschema (213) zu einem definierten Zielorganisationsschema (214);
Erzeugen (510, 512), auf der Vorrichtung (102), basierend auf den Anweisungen und der Simulation der Zielorganisationslogik (211) auf einem virtuellen Speicher, einer Sequenz von Aktualisierungsbefehlen zum Erzeugen der mindestens einen Zielspeichereinheit (209), die gemäß dem Zielorganisationsschema (214) organisiert ist, in dem nichtflüchtigen Speicher (103); und
Ausführen (524) der Aktualisierungsbefehle auf dem nichtflüchtigen Speicher (103),
wobei:
die ursprüngliche Organisationslogik (208) Logik und/oder Metadaten umfasst, die darstellen, wie auf Daten in der mindestens einen ursprünglichen Speichereinheit (205) zugegriffen wird, und die Zielorganisationslogik (209) Logik und/oder Metadaten umfasst, die darstellen, wie auf Daten in der mindestens einen Zielspeichereinheit (211) zugegriffen wird;
der nichtflüchtige Speicher (103) eine Vielzahl von Partitionen (406, 408, 410) umfasst, die jeweils eine damit verbundene Organisationslogik aufweisen;
das ursprüngliche Organisationsschema und das Zielorganisationsschema (213, 214) jeweils ein Partitionslayout enthalten, das die Größen, Stellen und Formate der Vielzahl von Partitionen angibt;
die Anweisungen Anweisungen zur Neupartitionierung des nichtflüchtigen Speichers (103) von dem ursprünglichen Partitionslayout zu dem definierten Zielpartitionslayout enthalten; und
das Erzeugen (510, 512) Folgendes umfasst:
Erlangen der in dem nichtflüchtigen Speicher (103) gespeicherten Inhalte, die gemäß dem ursprünglichen Organisationsschema (213) unter Verwendung der ursprünglichen Organisationslogik (208) organisiert sind;
Anwenden der Zielorganisationslogik (211) auf die erlangten Inhalte, um diese virtuell in einen virtuellen Speicher zu schreiben;
Erfassen von Datenelementen, die durch die Zielorganisationslogik (211) virtuell in ihre jeweiligen Zielstellen in dem nichtflüchtigen Speicher geschrieben werden, ohne unbedingt in den nichtflüchtigen Speicher zu schreiben (103);
Bestimmen für die erfassten Datenelemente, ob sie Teil des ursprünglichen Inhalts sind, der in dem nichtflüchtigen Speicher (103) gespeichert ist, und, wenn dies zutrifft, Bestimmen ihrer ursprünglichen Stelle in dem nichtflüchtigen Speicher (103);
für erfasste Datenelemente, die nicht Teil des in dem nichtflüchtigen Speicher gespeicherten ursprünglichen Inhalts sind, Erzeugen von Aktualisierungsbefehlen zum Speichern dieser Datenelemente in die Zielstellen in dem Zielorganisationsschema (211); und
für erfasste Datenelemente, die Teil des in dem nichtflüchtigen Speicher gespeicherten ursprünglichen Inhalts sind, Erstellen eines Mappings zwischen ihren ursprünglichen Stellen in dem nichtflüchtigen Speicher (103) und den Zielstellen in dem nichtflüchtigen Speicher (103) als Teil der Aktualisierungsbefehle.

2. Verfahren nach Anspruch 1, ferner Folgendes umfassend:
Identifizieren (516) von potentiellen Schreib-vor-Lese-Konflikten basierend auf der Sequenz von Aktualisierungsbefehlen; und
Lösen (522) der identifizierten potentiellen Schreib-vor-Lese-Konflikte.

3. Verfahren nach Anspruch 2, ferner Folgendes umfassend:
Sichern (520) des Inhalts aus dem nichtflüchtigen Speicher (103), der für das Ermöglichen einer ausfallsicheren Neuorganisierung erforderlich ist, auf ein Backup in einem vorgesehenen nichtflüchtigen Speicherbereich der Vorrichtung (102).

4. Verfahren nach Anspruch 2, wobei das Lösen eines oder mehrere von Folgendem umfasst:
Neuordnen der Sequenz von Aktualisierungsbefehlen;
Sichern (520) des Inhalts, der einem identifizierten potentiellen Schreib-vor-Lese-Konflikt entspricht, auf ein Backup in einem vorgesehenen nichtflüchtigen Speicherbereich der Vorrichtung (102);
Hinzufügen von Aktualisierungsbefehlen;
Löschen von Aktualisierungsbefehlen; und
Ändern von Aktualisierungsbefehlen.

5. Verfahren nach einem der Ansprüche 1 bis 4, wobei die Anweisungen Befehle zum Aktualisieren der Inhalte enthalten.

6. Verfahren nach Anspruch 1, wobei die Neupartitionierungsanweisungen Befehle zum Verschieben, Neuformatieren, Ändern des Formats, Defragmentieren, Erstellen, Ändern der Größe, Löschen und Aktualisieren für die jeweiligen Partitionen der Vielzahl von Partitionen (406, 408, 410) umfassen.

7. Verfahren nach einem der Ansprüche 1 bis 6, wobei:
die Vorrichtung (102) eine Computervorrichtung ist; und
die Vielzahl von Partitionen (406, 408, 410) mindestens eine Dateisystempartition beinhaltet, die Daten in einem bestimmten Dateisystemformat speichert.

8. Verfahren nach Anspruch 1, wobei die Datenelemente Dateien, Datensätze, Datei-Header und Metadaten umfassen.

9. Verfahren nach einem der Ansprüche 1 bis 8, wobei die Vorrichtung (102) während der Neuorganisierung funktionsfähig bleibt.

10. Verfahren nach einem der Ansprüche 1 bis 9, wobei:
die Vorrichtung (102) gemäß einem Linux- oder Android-Betriebssystem funktioniert; und
die Dateisystempartitionen Fourth-Extended-File-System(ext4)-Partitionen sind.

11. Verfahren nach einem der Ansprüche 1 bis 10, wobei das Erlangen (502) eines oder beide von dem internen Erzeugen von Anweisungen auf der Vorrichtung (102) gemäß einer internen Regel und dem Empfangen von Anweisungen aus einer externen Quelle (122) beinhaltet.

12. Nichttransitorisches computerlesbares Medium, das eine darauf gespeicherte Programmlogik aufweist, die bei Ausführung durch eine Computervorrichtung (102) mit einem physikalischen Speicher (103) mit einem ursprünglichen Organisationsschema (213), das eine Vielzahl von Speichereinheiten (205) beinhaltet, die jeweils eine damit verbundene, ursprüngliche Organisationslogik (208) aufweist, die Computervorrichtung veranlasst, die Vor-Ort-Neuorganisierung des physikalischen Speichers (103) zu einem Zielorganisationsschema (214) durchzuführen, wobei die Programmlogik Folgendes umfasst:
Programmlogik zum Erlangen (502) von Anweisungen zum Neuorganisieren des physikalischen Speichers (103) von dem ursprünglichen Organisationsschema (213) zu einem definierten Zielorganisationsschema (214) mit einer Vielzahl von Zielspeichereinheiten (209), die jeweils eine damit verbundene Zielorganisationslogik (211) aufweisen;
Programmlogik zum Erzeugen (510, 512), auf der Computervorrichtung (102), basierend auf den Anweisungen und der Simulation der Organisationslogik (211), einer Sequenz von Aktualisierungsbefehlen zum Erzeugen der Vielzahl von Zielspeichereinheiten (209) in dem physikalischen Speicher (103) ;
Programmlogik zum Identifizieren (516), basierend auf der Sequenz von Aktualisierungsbefehlen, von potentiellen Schreib-vor-Lese-Konflikten, die dazu führen können, dass Daten in dem physikalischen Speicher (103) überschrieben werden, wenn die Aktualisierungsbefehle ausgeführt werden;
Programmlogik zum Lösen (522) der identifizierten potentiellen Schreib-vor-Lese-Konflikte; und
Programmlogik zum Ausführen (524) der Aktualisierungsbefehle auf dem physikalischen Speicher (103),
wobei:
jede ursprüngliche Organisationslogik (208) Logik und/oder Metadaten umfasst, die darstellen, wie auf Daten in der verbundenen jeweiligen ursprünglichen Speichereinheit (205) zugegriffen wird, und jede Zielorganisationslogik (211) Logik und/oder Metadaten umfasst, die darstellen, wie auf Daten in der verbundenen jeweiligen Zielspeichereinheit (209) zugegriffen wird;
der physikalische Speicher (103) eine Vielzahl von Partitionen (406, 408, 410) umfasst, die jeweils eine damit verbundene Organisationslogik aufweisen;
das ursprüngliche Organisationsschema und das Zielorganisationsschema (213, 214) jeweils ein Partitionslayout enthalten, das die Größen, Stellen und Formate der Vielzahl von Partitionen angibt;
die Anweisungen Anweisungen zur Neupartitionierung des physikalischen Speichers (103) von dem ursprünglichen Partitionslayout zu dem definierten Zielpartitionslayout enthalten; und
die Programmlogik zum Erzeugen (510, 512) Folgendes umfasst:
Programmlogik zum Erlangen der in dem physikalischen Speicher (103) gespeicherten Inhalte, die gemäß dem ursprünglichen Organisationsschema (213) unter Verwendung der ursprünglichen Organisationslogik (208) organisiert sind;
Programmlogik zum Anwenden der Zielorganisationslogik (211) auf die erlangten Inhalte, um diese virtuell in einen virtuellen Speicher zu schreiben;
Programmlogik zum Erfassen von Datenelementen, die durch die Zielorganisationslogik (211) virtuell in ihre jeweiligen Zielstellen in dem nichtflüchtigen Speicher geschrieben werden, ohne unbedingt in den physikalischen Speicher zu schreiben (103);
Programmlogik zum Bestimmen für die erfassten Datenelemente, ob sie Teil des ursprünglichen Inhalts sind, der in dem physikalischen Speicher (103) gespeichert ist, und, wenn dies zutrifft, Bestimmen ihrer ursprünglichen Stelle in dem physikalischen Speicher (103) ;
Programmlogik zum Erzeugen, für erfasste Datenelemente, die nicht Teil des in dem physikalischen Speicher gespeicherten ursprünglichen Inhalts sind, von Aktualisierungsbefehlen zum Speichern dieser Datenelemente in die Zielstellen in dem Zielorganisationsschema (211); und
Programmlogik zum Erstellen, für erfasste Datenelemente, die Teil des in dem physikalischen Speicher gespeicherten ursprünglichen Inhalts sind, eines Mappings zwischen ihren ursprünglichen Stellen in dem physikalischen Speicher (103) und den Zielstellen in dem physikalischen Speicher (103) als Teil der Aktualisierungsbefehle.

13. System für eine Vor-Ort-Neuorganisierung eines nichtflüchtigen Speichers (103) einer Mobilvorrichtung (102) mit einem ursprünglichen Organisationsschema (213) mit mindestens einer ursprünglichen Speichereinheit und einer damit verbundenen ursprünglichen Organisationslogik zu einem Zielorganisationsschema (214) mit mindestens einer Zielspeichereinheit (209) und einer damit verbundenen Zielorganisationslogik (211), wobei das System Folgendes umfasst:
ein Erlangungsmodul (321), das konfiguriert ist, um Anweisungen zum Neuorganisieren des nichtflüchtigen Speichers (103) von dem ursprünglichen Organisationsschema (213) zu einem definierten Zielorganisationsschema (214) mit mindestens einer Zielspeichereinheit (209) und einer damit verbundenen Zielorganisationslogik (211) zu erlangen;
ein Erzeugungsmodul (332), das konfiguriert ist, um auf der Mobilvorrichtung (102) basierend auf den Anweisungen und der Simulation der Organisationslogik (211) eine Sequenz von Aktualisierungsbefehlen zum Erzeugen der mindestens einen Zielspeichereinheit (209) in dem nichtflüchtigen Speicher (103) zu erzeugen;
ein Konfliktidentifizierungsmodul, das konfiguriert ist, um die Organisationslogiken (211) zu veranlassen, basierend auf der Sequenz von Aktualisierungsbefehlen potenzielle Schreib-vor-Lese-Konflikte zu identifizieren, die dazu führen können, dass Daten in dem nichtflüchtigen Speicher (103) überschrieben werden, wenn die Aktualisierungsbefehle ausgeführt werden;
ein Konfliktlösungsmodul (342), das konfiguriert ist, um die identifizierten potentiellen Schreib-vor-Lese-Konflikte zu lösen; und
ein Ausführungsmodul (334), das konfiguriert ist, um die Aktualisierungsbefehle auf dem nichtflüchtigen Speicher (103) auszuführen,
wobei:
die ursprüngliche Organisationslogik (208) Logik und/oder Metadaten umfasst, die darstellen, wie auf Daten in der mindestens einen ursprünglichen Speichereinheit (205) zugegriffen wird, und die Zielorganisationslogik (209) Logik und/oder Metadaten umfasst, die darstellen, wie auf Daten in der mindestens einen Zielspeichereinheit (211) zugegriffen wird;
der nichtflüchtige Speicher (103) eine Vielzahl von Partitionen (406, 408, 410) umfasst, die jeweils eine damit verbundene Organisationslogik aufweisen;
das ursprüngliche Organisationsschema und das Zielorganisationsschema (213, 214) jeweils ein Partitionslayout enthalten, das die Größen, Stellen und Formate der Vielzahl von Partitionen angibt;
die Anweisungen Anweisungen zur Neupartitionierung des nichtflüchtigen Speichers (103) von dem ursprünglichen Partitionslayout zu dem definierten Zielpartitionslayout enthalten; und
das Erzeugungsmodul (332) konfiguriert ist, um eine Sequenz von Aktualisierungsbefehlen durch Folgendes zu erzeugen:
Erlangen der in dem nichtflüchtigen Speicher (103) gespeicherten Inhalte, die gemäß dem ursprünglichen Organisationsschema (213) unter Verwendung der ursprünglichen Organisationslogik (208) organisiert sind;
Anwenden der Zielorganisationslogik (211) auf die erlangten Inhalte, um diese virtuell in einen virtuellen Speicher zu schreiben;
Erfassen von Datenelementen, die durch die Zielorganisationslogik (211) virtuell in ihre jeweiligen Zielstellen in dem nichtflüchtigen Speicher geschrieben werden, ohne unbedingt in den nichtflüchtigen Speicher zu schreiben (103);
Bestimmen für die erfassten Datenelemente, ob sie Teil des ursprünglichen Inhalts sind, der in dem nichtflüchtigen Speicher (103) gespeichert ist, und, wenn dies zutrifft, Bestimmen ihrer ursprünglichen Stelle in dem nichtflüchtigen Speicher (103);
für erfasste Datenelemente, die nicht Teil des in dem nichtflüchtigen Speicher gespeicherten ursprünglichen Inhalts sind, Erzeugen von Aktualisierungsbefehlen zum Speichern dieser Datenelemente in die Zielstellen in dem Zielorganisationsschema (211); und
für erfasste Datenelemente, die Teil des in dem nichtflüchtigen Speicher gespeicherten ursprünglichen Inhalts sind, Erstellen eines Mappings zwischen ihren ursprünglichen Stellen in dem nichtflüchtigen Speicher (103) und den Zielstellen in dem nichtflüchtigen Speicher (103) als Teil der Aktualisierungsbefehle.

14. System nach Anspruch 13, wobei das Erzeugungsmodul (332) ferner konfiguriert ist, um zu simulieren, dass die Zielorganisationslogik (211) ihre Zielschreibstellen in dem nichtflüchtigen Speicher (103) speichert, ohne in den nichtflüchtige Speicher (103) zu schreiben.

## Revendications

1. Procédé de réorganisation in situ de contenu mémorisé dans une mémoire non volatile (103) d'un dispositif (102) et organisé selon un schéma d'organisation d'origine (213) ayant au moins une unité de mémoire d'origine (205) et une logique d'organisation d'origine (208) associée à celle-ci, à un schéma d'organisation cible (214) ayant au moins une unité de mémoire cible (209) et une logique d'organisation cible (211) associée à celle-ci, le procédé comprenant :
l'obtention (502) d'instructions pour réorganiser le contenu de la mémoire non volatile (103) du schéma d'organisation d'origine (213) à un schéma d'organisation cible défini (214) ;
la génération (510, 512), sur le dispositif (102), sur la base des instructions et de la simulation de la logique d'organisation cible (211) sur une mémoire virtuelle, d'une séquence de commandes de mise à jour pour générer, dans la mémoire non volatile (103), l'au moins une unité de mémoire cible (209) organisée selon le schéma d'organisation cible (214) ; et
l'exécution (524) des commandes de mise à jour sur la mémoire non volatile (103),
dans lequel :
la logique d'organisation d'origine (208) comprend une logique et/ou des métadonnées représentant comment on accède aux données dans l'au moins une unité de mémoire d'origine (205) et la logique d'organisation cible (209) comprend une logique et/ou des métadonnées représentant comment on accède aux données dans l'au moins une unité de mémoire cible (211) ;
la mémoire non volatile (103) comprend une pluralité de partitions (406, 408, 410) ayant chacune une logique d'organisation respective qui lui est associée ;
les schémas d'organisation d'origine et cible (213, 214) comprennent chacun une disposition de partition indiquant les tailles, les emplacements et les formats de la pluralité de partitions ;
les instructions comprennent des instructions pour répartir la mémoire non volatile (103) de la disposition de partition d'origine à la disposition de partition cible définie ; et
la génération (510, 512) comprend :
l'obtention du contenu mémorisé dans la mémoire non volatile (103) organisée selon le schéma d'organisation d'origine (213) en utilisant la logique d'organisation d'origine (208) ;
l'application de la logique d'organisation cible (211) au contenu obtenu pour l'écrire virtuellement sur une mémoire virtuelle ;
la capture d'éléments de données écrits virtuellement par la logique d'organisation cible (211) dans leurs emplacements cibles respectifs dans la mémoire non volatile sans nécessairement écrire dans la mémoire non volatile (103) ;
le fait de déterminer, pour les éléments de données capturés, s'ils font partie du contenu d'origine mémorisé dans la mémoire non volatile (103) et, le cas échéant, leur emplacement d'origine dans la mémoire non volatile (103) ;
pour des éléments de données capturés qui ne font pas partie du contenu d'origine mémorisé dans la mémoire non volatile, la génération de commandes de mise à jour pour mémoriser ces éléments de données aux emplacements cibles dans le schéma d'organisation cible (211) ; et
pour des éléments de données capturés qui font partie du contenu d'origine mémorisé dans la mémoire non volatile, la création, dans le cadre des commandes de mise à jour, d'un mappage entre leurs emplacements d'origine dans la mémoire non volatile (103) et les emplacements cibles dans la mémoire non volatile (103).

2. Procédé selon la revendication 1, comprenant en outre :
l'identification (516), sur la base de la séquence de commandes de mise à jour, des conflits potentiels d'écriture avant lecture ; et
la résolution (522) des conflits potentiels d'écriture avant lecture identifiés.

3. Procédé selon la revendication 2, comprenant en outre :
la sauvegarde (520) de contenu provenant de la mémoire non volatile (103) nécessaire pour permettre une réorganisation à sécurité intégrée, vers une sauvegarde dans une zone de mémoire non volatile désignée du dispositif (102).

4. Procédé selon la revendication 2, dans lequel la résolution comprend l'un ou plusieurs :
de la remise en ordre de la séquence de commandes de mise à jour ;
de la sauvegarde (520) de contenu correspondant à un conflit potentiel d'écriture avant lecture identifié, vers une sauvegarde dans une zone de mémoire non volatile désignée du dispositif (102) ;
de l'ajout de commandes de mise à jour ;
de la suppression de commandes de mise à jour ; et
de la modification de commandes de mise à jour.

5. Procédé selon l'une des revendications 1 à 4, dans lequel les instructions comprennent des commandes pour mettre à jour le contenu.

6. Procédé selon la revendication 1, dans lequel les instructions de repartitionnement comprennent des commandes de déplacement, de reformatage, de changement de format, de défragmentation, de création, de redimensionnement, de suppression et de mise à jour pour des partitions respectives de la pluralité de partitions (406, 408, 410).

7. Procédé selon l'une quelconque des revendications 1 à 6, dans lequel :
le dispositif (102) est un dispositif informatique ; et
la pluralité de partitions (406, 408, 410) contient au moins une partition de système de fichiers mémorisant des données dans un format de système de fichiers spécifique.

8. Procédé selon la revendication 1, dans lequel les éléments de données comprennent des fichiers, des enregistrements, des en-têtes de fichier et des métadonnées.

9. Procédé selon l'une des revendications 1 à 8, dans lequel le dispositif (102) reste opérationnel pendant la réorganisation.

10. Procédé selon l'une des revendications 1 à 9, dans lequel :
le dispositif (102) fonctionne selon un système d'exploitation Linux ou Android ; et
les partitions de système de fichiers sont les quatrièmes partitions du système de fichiers étendu (ext4).

11. Procédé selon l'une des revendications 1 à 10, dans lequel l'obtention (502) comprend l'une ou les deux de la génération d'instructions en interne sur le dispositif (102) conformément à une règle interne et de la réception d'instructions provenant d'une source externe (122).

12. Support non transitoire lisible par ordinateur sur lequel est mémorisée une logique de programme, qui, si elle est exécutée par un dispositif informatique (102) ayant une mémoire physique (103) avec un schéma d'organisation d'origine (213) comprenant une pluralité d'unités de mémoire (205) ayant chacune une logique d'organisation d'origine respective (208) qui lui est associée, amène le dispositif informatique à effectuer une réorganisation in situ de la mémoire physique (103) selon un schéma d'organisation cible (214), la logique de programme comprenant :
une logique de programme pour obtenir (502) des instructions pour réorganiser la mémoire physique (103) du schéma d'organisation d'origine (213) à un schéma d'organisation cible défini (214) ayant une pluralité d'unités de mémoire cibles (209), chacune ayant une logique d'organisation cible respective (211) qui lui est associée ;
une logique de programme pour générer (510, 512), sur le dispositif informatique (102), sur la base des instructions et de la simulation des logiques d'organisation (211), une séquence de commandes de mise à jour pour générer la pluralité d'unités de mémoire cibles (209) dans la mémoire physique (103) ;
une logique de programme pour identifier (516), sur la base de la séquence de commandes de mise à jour, des conflits potentiels d'écriture avant lecture qui peuvent entraîner l'écrasement de données dans la mémoire physique (103) si les commandes de mise à jour sont exécutées ;
une logique de programme pour résoudre (522) les conflits potentiels d'écriture avant lecture identifiés ; et
une logique de programme pour exécuter (524) les commandes de mise à jour sur la mémoire physique (103),
dans lequel :
chaque logique d'organisation d'origine (208) comprend une logique et/ou des métadonnées représentant comment on accède aux données dans l'unité de mémoire d'origine respective associée (205) et chaque logique d'organisation cible (211) comprend une logique et/ou des métadonnées représentant comment on accède à des données dans l'unité de mémoire cible respective associée (209) ;
la mémoire physique (103) comprend une pluralité de partitions (406, 408, 410) ayant chacune une logique d'organisation respective qui lui est associée ;
les schémas d'organisation d'origine et cible (213, 214) comprennent chacun une disposition de partition indiquant les tailles, les emplacements et les formats de la pluralité de partitions ;
les instructions comprennent des instructions pour répartir la mémoire physique (103) de la disposition de partition d'origine à la disposition de partition cible définie ; et
la logique de programme pour la génération (510, 512) comprend :
une logique de programme pour obtenir le contenu mémorisé dans la mémoire physique (103) organisée selon le schéma d'organisation d'origine (213) en utilisant la logique d'organisation d'origine (208) ;
une logique de programme pour appliquer la logique d'organisation cible (211) au contenu obtenu pour l'écrire virtuellement sur une mémoire virtuelle ;
une logique de programme pour capturer des éléments de données écrits virtuellement par la logique d'organisation cible (211) dans leurs emplacements cibles respectifs dans la mémoire non volatile sans nécessairement écrire dans la mémoire physique (103) ;
une logique de programme pour déterminer, pour les éléments de données capturés, s'ils font partie du contenu d'origine mémorisé dans la mémoire physique (103) et, le cas échéant, leur emplacement d'origine dans la mémoire physique (103) ;
une logique de programme pour générer, pour des éléments de données capturés qui ne font pas partie du contenu d'origine mémorisé dans la mémoire physique, des commandes de mise à jour pour mémoriser ces éléments de données aux emplacements cibles dans le schéma d'organisation cible (211) ; et
une logique de programme pour créer, pour des éléments de données capturés qui font partie du contenu d'origine mémorisé dans la mémoire physique, dans le cadre des commandes de mise à jour, un mappage entre leurs emplacements d'origine dans la mémoire physique (103) et les emplacements cibles dans la mémoire physique (103).

13. Système de réorganisation in situ de mémoire non volatile (103) d'un dispositif mobile (102) ayant un schéma d'organisation d'origine (213) ayant au moins une unité de mémoire d'origine et une logique d'organisation d'origine associée à celle-ci à un schéma d'organisation cible (214) ayant au moins une unité de mémoire cible (209) et une logique d'organisation cible (211) associée à celle-ci, le système comprenant :
un module d'obtention (321) configuré pour obtenir des instructions pour réorganiser la mémoire non volatile (103) du schéma d'organisation d'origine (213) à un schéma d'organisation cible défini (214) ayant au moins une unité de mémoire cible (209) et une logique d'organisation cible (211) qui lui est associée ;
un module de génération (332) configuré pour générer, sur le dispositif mobile (102), sur la base des instructions et de la simulation de la logique d'organisation (211), une séquence de commandes de mise à jour pour générer l'au moins une unité de mémoire cible (209) dans la mémoire non volatile (103) ;
un module d'identification de conflit configuré pour appeler les logiques d'organisation (211) à identifier, sur la base de la séquence de commandes de mise à jour, les conflits potentiels d'écriture avant lecture qui peuvent entraîner l'écrasement des données dans la mémoire non volatile (103) si les commandes de mise à jour sont effectuées ;
un module de résolution de conflit (342) configuré pour résoudre les conflits potentiels d'écriture avant lecture identifiés ; et
un module d'exécution (334) configuré pour exécuter les commandes de mise à jour sur la mémoire non volatile (103),
dans lequel :
la logique d'organisation d'origine (208) comprend une logique et/ou des métadonnées représentant comment on accède aux données dans l'au moins une unité de mémoire d'origine (205) et la logique d'organisation cible (209) comprend une logique et/ou des métadonnées représentant comment on accède aux données dans l'au moins une unité de mémoire cible (211) ;
la mémoire non volatile (103) comprend une pluralité de partitions (406, 408, 410) ayant chacune une logique d'organisation respective qui lui est associée ;
les schémas d'organisation d'origine et cible (213, 214) comprennent chacun une disposition de partition indiquant les tailles, les emplacements et les formats de la pluralité de partitions ;
les instructions comprennent des instructions pour répartir la mémoire non volatile (103) de la disposition de partition d'origine à la disposition de partition cible définie ; et
le module de génération (332) est configuré pour générer une séquence de commandes de mise à jour par :
l'obtention du contenu mémorisé dans la mémoire non volatile (103) organisée selon le schéma d'organisation d'origine (213) en utilisant la logique d'organisation d'origine (208) ;
l'application de la logique d'organisation cible (211) au contenu obtenu pour l' écrire virtuellement sur une mémoire virtuelle ;
la capture d'éléments de données écrits virtuellement par la logique d'organisation cible (211) dans leurs emplacements cibles respectifs dans la mémoire non volatile sans nécessairement écrire dans la mémoire non volatile (103) ;
le fait de déterminer, pour les éléments de données capturés, s'ils font partie du contenu d'origine mémorisé dans la mémoire non volatile (103) et, le cas échéant, leur emplacement d'origine dans la mémoire non volatile (103) ;
pour des éléments de données capturés qui ne font pas partie du contenu d'origine mémorisé dans la mémoire non volatile, la génération de commandes de mise à jour pour mémoriser ces éléments de données aux emplacements cibles dans le schéma d'organisation cible (211) ; et
pour des éléments de données capturés qui font partie du contenu d'origine mémorisé dans la mémoire non volatile, la création, dans le cadre des commandes de mise à jour, d'un mappage entre leurs emplacements d'origine dans la mémoire non volatile (103) et les emplacements cibles dans la mémoire non volatile (103).

14. Système selon la revendication 13, dans lequel le module de génération (332) est en outre configuré pour simuler la logique d'organisation cible (211) pour enregistrer ses emplacements d'écriture cibles dans la mémoire non volatile (103) sans écrire dans la mémoire non volatile (103).
